Europäisches Patentamt

European Patent Office

Office européen des brevets

(11) Publication number: **0 053 894**
**B1**

# EUROPEAN PATENT SPECIFICATION

(45) Date of publication of patent specification: **20.03.85**

(51) Int. Cl.⁴: **G 01 P 3/487**

(21) Application number: **81305565.4**

(22) Date of filing: **25.11.81**

(54) **Cycle wheel rotation detector device.**

(30) Priority: **29.11.80 JP 171527/80 U**

(43) Date of publication of application:
**16.06.82 Bulletin 82/24**

(45) Publication of the grant of the patent:
**20.03.85 Bulletin 85/12**

(84) Designated Contracting States:
**DE FR GB NL SE**

(56) References cited:
**CH-A- 551 625**
**GB-A- 211 086**
**GB-A-2 034 047**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-Minamimachi**
**Sakai-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

## Description

This invention relates to a detector device for use in detecting the number of rotations of a cycle wheel having a hub shaft secured to a cycle frame, a hub shell which has a pair of radial flanges and is supported rotatably on said hub shaft by at least two bearing means, said detector device being provided with a mounting member on said hub shaft and a rotary member on said hub shell and rotatable together therewith, said mounting member being disposed in close proximity to said rotary member.

Conventionally the number of rotations of a cycle wheel is counted mechanically using the tyre or rim of the cycle wheel. Normally a drive unit is arranged to be driven by the tyre or rim of the wheel and to transmit rotation thereof to a remote meter via a flexible cable linkage, the meter indicating the number of rotations of the wheel.

Such a drive unit and flexible cable connection to the meter are relatively complex in construction and time-consuming in assembly. Also, a significant rotational resistance is exerted on the wheel by the drive unit requiring an additional driving force during running of the cycle and tending to generate additional noise.

It is an object of the present invention to avoid or minimize one or more of the above disadvantages.

The present invention provides a detector device in combination with a cycle wheel for use in detecting the number of rotations of the cycle wheel, said cycle wheel having a hub shaft secured in use to a cycle frame, a hub shell which has a pair of radial flanges and is supported rotatably on said hub shaft by at least two bearing means, said detector device comprising a mounting means directly or indirectly on said hub shaft and a rotary means directly or indirectly on said hub shell and rotatable together therewith, said mounting means being disposed in close proximity to said rotary means, said mounting means and rotary means each supporting different ones of a detector means and an actuator means formed and arranged for periodic interaction thereof so as to produce a periodic electrical signal in use of the detector device with said detector device connected in an electrical circuit, which electrical signal is a function of the number of rotations of the wheel, characterized in that said mounting means comprises an annular member formed and arranged so as to provide a sealing means for a respective bearing means between said hub shaft and hub shell, with a radially inward portion secured to the hub shaft and a radially outward portion opposed to and in close proximity to said rotary means but spaced therefrom so as to permit relative rotation therebetween whilst substantially preventing ingress of foreign material therebetween.

GB—A—211086 discloses a wire wheel wherein a magnet construction is caused to rotate past a detector coil mounted on a stud coaxial, but not rotating, with the wheel hub.

Thus, the detector device of the invention functions by detecting rotation of the hub of the wheel and is of relatively simple construction and easy to assemble. Also, since the detection is performed electrically and substantially non-mechanically more accurate readings can be obtained than with conventional systems whilst at the same time the creation of additional frictional resistance is substantially avoided and effective sealing of the bearing achieved.

The mounting member may be formed integrally with a hub shaft or separately therefrom and secured thereto as may also be the rotary member formed integrally with the hub shell or separately therefrom and secured thereto.

Further preferred features and advantages of the invention will appear from the following description given by way of example of one embodiment of a detector device illustrated with reference to the accompanying drawings in which:

Fig. 1 is a partially sectioned front elevation of a cycle wheel hub with a detector device of the invention mounted thereon;

Fig. 2 is a transverse section taken on the line II—II in Fig. 1;

Fig. 3 is a detail sectional view of a principal portion of the detector device in Fig. 1 on an enlarged scale;

Fig. 4 is a partially cutaway perspective view of a reed switch of the detector device of Figs. 1 to 3; and

Fig. 5 is a block circuit diagram illustrating the method of use of the detector device of Figs. 1 to 4.

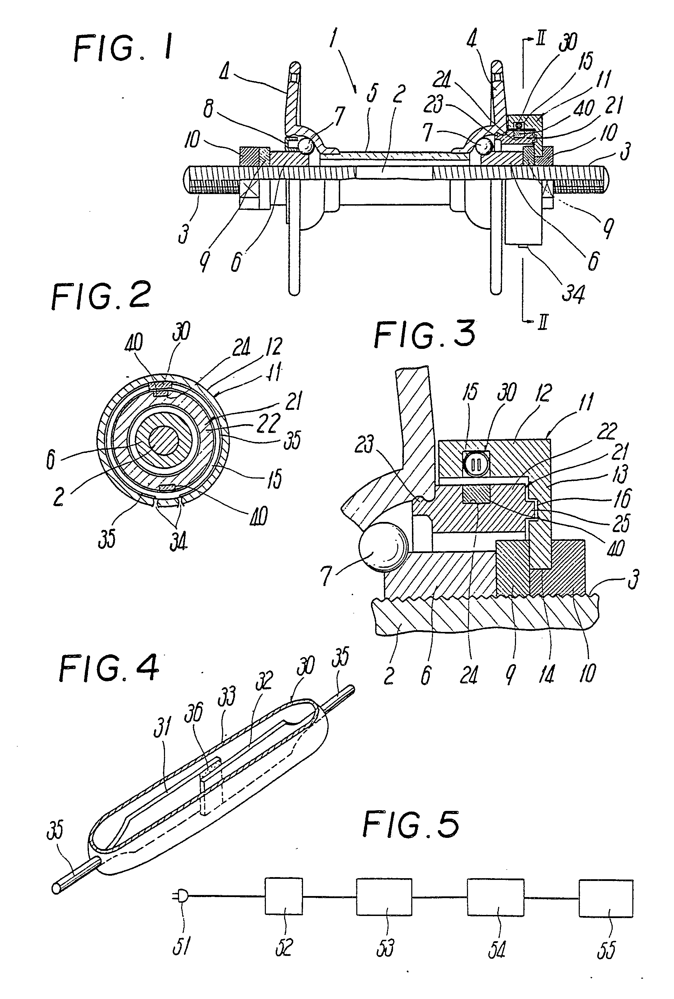

Fig. 1 shows a front wheel hub 1 of a cycle. The hub 1 is so constructed that a hub shell 5 having at both axial ends hub flanges 4 fixed thereto, is mounted on and around a hub shaft 2 which has screw threaded axial end portions 3, and ball bearings 7 interposed between the radially inner surface of each hub flange 4 and a respective ball holder 6 mounted on the hub shaft 2 thereby rotatably to support the hub shell 5 on the hub shaft 2. A sealing member 8 and lock nuts 9, 10 are screw threadedly engaged with the hub shaft 2 to secure the ball holders 6.

A detector device of the invention uses the rotational movement of a wheel hub 1 of the above described construction to detect the number of rotations of the wheel. The detector device comprises a mounting member 11 formed separately from the hub shaft 2 and secured thereto. The mounting member 11 comprises an annular body 12 with a radially inwardly extending flange 13 at one axial end of said body 12, the flange 13 defining a central aperture 14 larger in diameter than the hub shaft 2 and being engaged by and sandwiched between the lock nuts 9 and 10 screwed onto a said axial end portion 3 of the hub shaft 2, or, as an alternative, between the ball holder 6 and a lock nut 10 therefor (not shown), so that tightening of the lock nuts 9 and 10 results in a secure fixing of the mounting member 11 on the hub shaft 3.

A rotary member 21 formed separate from the hub shell 5 and secured thereto for rotation together therewith, comprises a cylindrical body 22 with a mounting cone 23, the cylindrical body 22 having an outer diameter smaller than the inner diameter of the annular body 12 of the mounting member 11, the mounting cone 23 being formed at one axial end of body 22 for fitting at the radially inner periphery of the hub flange 4 axially outwardly from the ball race thereof, thereby to secure the rotary member 21 on the hub shell 5.

The radially inner periphery of the body 12 of the mounting member 11 is opposed to and in close proximity to the radially outer periphery of the body 22 of the rotary member 21. An annular recess 15 is provided in the radially inner periphery of the body 12 of the mounting member 11 and opposed recesses 24 are provided in the radially outer periphery of the body 22 of the rotary member 21. The annular recess 15 houses a detector element 30 in the form of a reed switch, and the recesses 24 house two actuators 40 in the form of magnets for actuating the reed switch 30.

The reed switch 30, as shown in Fig. 4, comprises a pair of reeds 31 and 32 which are housed within an elongate glass tube 33 in which the reeds extend generally longitudinally with respective connecting wire leads 35 extending from opposite ends of said tube 33 circumferentially around the annular recess 15 to respective ones of a pair of connectors 34 which are disposed more or less diametrically opposite the reed switch 30 and which extend radially outwardly through the body 12 of the mounting member 11. Alternatively, printed circuit type connections or a wire-printed plate could be used instead of the wire leads 35 in order to reduce manufacturing costs by saving on the use of wire leads.

In the above described detector device the rotary member 21 fixed to the hub shell 5 rotates together therewith thereby following the rotation of the wheel. The actuators 40 rotate correspondingly, actuating the reed switch 30 or other detector element provided on the mounting member 11 to open and close a circuit extending therethrough thereby producing an electrical response to the number of rotations of the cycle wheel.

More specifically the reeds 31 and 32 close together and open again making and breaking a circuit as the actuators or magnets 40 rotate past them, so that the detector element reed switch 30 periodically passes an output pulse signal current, the number of pulses being monitored to indicate the number of rotations of the wheel.

The detector device of the invention is connected in use to an electrical indicator device, for example as shown in Fig. 5, for displaying, for example, the cycle speed, or some other quantity such as distance covered, which quantity is dependent on the number of rotations executed by the cycle wheel. The indicator device comprises an amplifier 52 having a plug 51 for connection to the connectors 34, an analog-digital convertor 53, a microcomputer 54, and a display unit 55, usually a visual display unit VDU, the various means being interconnected in conventional manner by suitable leads or the like, and at least one of said means including power supply means arranged for driving the detector indicator including supplying a voltage to said reed switch 30. The pulse signal produced in the circuit by closing and opening of the reed switch is, when presented to the microcomputer 54 via the analog-digital convertor 53, converted into digital form and then displayed conveniently as the cycle speed by the display unit 55.

In an alternative embodiment, the mounting member 11 could be formed integrally with the hub shaft 2. Also, the ball holder 6 or the lock nut 9 could be utilized as the mounting member 11. Furthermore, the rotary member 21 could be formed integrally with the hub shell 5 or part of the hub shell 5 itself could be utilized as the rotary member 21.

The reed switch used as the detecting element 30 is preferably mounted in or on the mounting member 11, but could be supported by the rotary member 21, whilst the actuators 40 are supported by the mounting member.

As a further alternative, the reed switch could be supported by a base plate held in the annular recess 15. Also more than two or indeed only one actuator could be used. Furthermore the reed switch and magnetic actuators themselves could be replaced by other elements using other detection systems e.g. photo sensitive or photoelectric systems.

With reference to the construction shown in Fig. 1 it may be noted that the open end of the annular body 12 of the mounting member 11 is disposed opposite and in close proximity to the axially outer surface of the hub flange 4, so that the mounting member 11 can also function as a sealing means for the bearing means which rotatably support the hub shell 5 on the hub shaft 2. In this case, an annular axially extending groove 16 is provided in the axially inner face of the flange 13 and an annular axially extending complementary projection 25 is provided on the axially outer end face of the body 22 of the rotary member 21 as shown in Figs. 1 and 3, the projection 25 locating in the annular groove 16, thereby improving the sealing around the bearing means. The annular groove 16 and projection 25 may of course be arranged in reverse manner to achieve the same objectives.

As will be apparent from the above, the detector device of the invention is of relatively simple construction and does not give rise to any significant additional frictional resistance between the rotary member and the mounting member. Also, the use of essentially electrical substantially non-mechanical detection means can provide more accurate readings than conventional mechanical systems.

## Claims

1. A detector device in combination with a cycle wheel for use in detecting the number of rotations of the cycle wheel, said cycle wheel having a hub shaft (2) secured in use to a cycle frame, a hub shell (5) which has a pair of radial flanges (4) and is supported rotatably on said hub shaft (2) by at least two bearing means (6, 7), said detector device comprising a mounting means (11) directly or indirectly on said hub shaft (2) and a rotary means (21) directly or indirectly on said hub shell (5) and rotatable together therewith, said mounting means (11) being disposed in close proximity to said rotary means (21), said mounting means (11) and rotary means (21) each supporting different ones of a detector means (30) and an actuator means (40) formed and arranged for periodic interaction thereof so as to produce a periodic electrical signal in use of the detector device with said detector device connected in an electrical circuit (51—55), which electrical signal is a function of the number of rotations of the wheel, characterized in that said mounting means (11) comprises an annular member (12, 13) formed and arranged so as to provide a sealing means for a respective bearing means (6, 7) between said hub shaft (2) and hub shell (5), with a radially inward portion (13) secured to the hub shaft (2) and a radially outward portion (12) opposed to and in close proximity to said rotary means (21) but spaced therefrom so as to permit relative rotation therebetween whilst substantially preventing ingress of foreign material therebetween.

2. A detector device according to Claim 1, wherein said detector means (30) is mounted on said mounting means (11) and said actuator means (40) on said rotary means (21).

3. A detector device according to Claim 1 or Claim 2 wherein said radially outward portion is in the form of an annular body (12) and said radially inward portion is in the form of a flange (13) defining a central aperture larger in diameter than said hub shaft (2) which extends through said aperture and is secured to said flange (13).

4. A detector device according to Claim 3, wherein a securing means for said flange (13) comprises lock nut means (9, 10) arranged for securing a part (6) of said bearing means (6, 7).

5. A detector device according to Claim 3 or Claim 4, wherein the axially inner end of said mounting means (11) is formed and arranged to be opposed to and in close proximity to an axially outer surface of a respective said flange (4) of said hub shell.

6. A detector according to any one of Claims 3 to 5, wherein said rotary means (21) is generally annular with an outer diameter smaller than the inner diameter of said annular body (12) of said annular mounting means (11), the radially outer periphery of said rotary member (21) being opposite the inner periphery of said annular body (12).

7. A detector device according to Claim 5, wherein an annular axially extending groove (16) is provided in one of said flange (13) of said mounting means (11) or an opposed axially outer end face of a cylindrical body (22) of said rotary means (21), and an annular axially extending generally complementary projection (25) locatable in said annular groove (16) is provided in the other.

8. A detector device according to any one of Claims 1 to 7 wherein said annular body (12) of said mounting means (11) has at its radially inner periphery said detector means (30) and said rotary means (21) has at its radially outer periphery said actuator means (40).

## Revendications

1. Dispositif détecteur en combinaison avec une roue de bicyclette, utilisable pour détecter le nombre de rotations de la roue de bicyclette, la dite roue de bicyclette comportant un axe de moyeu (2) fixé en utilisation à un cadre de bicyclette, une virole de moyeu (5) portant deux brides radiales (4) et supportée de façon tournante sur l'axe de moyeu (2) par au moins deux paliers (6, 7), ce dispositif détecteur comprenant des moyens (11) de fixation directe ou indirecte sur l'axe de moyeu (2) et des moyens rotatif (21) liés directement ou indirectement à la virole de moyeu (5) de façon à tourner avec celle-ci, les moyens de fixation (11) étant disposés à faible distance des moyens rotatifs (21), les moyens de fixation (11) et les moyens rotatifs (21) supportant chacun un élément différent de moyens de détection (30) et de moyens de commande (40) prévus et disposés pour leur interaction périodique, de manière à engendrer un signal électrique périodique en utilisation du dispositif détecteur lorsque ce dispositif détecteur est raccordé dans un circuit électrique (51—55), ce signal électrique étant fonction du nombre de rotations de la roue, caractérisé en ce que les moyens de fixation (11) comprennent une pièce annulaire (12, 13) prévue et disposée de manière à constituer un moyen d'étanchéité pour un palier respectif (6, 7) entre l'axe de moyeu (2) et la virole de moyeu (5), une partie radialement intérieure (13) étant fixée à l'axe de moyeu (2) et une partie radialement extérieure (12) étant située en face et à faible distance des moyens rotatifs (21) mais espacée de ces derniers de manière à permettre une rotation relative entre ces pièces tout en empêchant sensiblement l'entrée de corps étrangers entre ces pièces.

2. Dispositif détecteur suivant la revendication 1, dans lequel les moyens de détection (30) sont montés sur les moyens de fixation (11) et les moyens de commande (40) sont montés sur les moyens rotatifs (21).

3. Dispositif détecteur suivant la revendication 1 ou la revendication 2, dans lequel la dite partie radialement extérieure est sous la forme d'un corps annulaire (12) et la dite partie radialement intérieure est sous la forme d'une bride (13) comportant une ouverture centrale de diamètre supérieur à celui de l'axe de moyeu (2) qui traverse cette ouverture et est fixé à la bride (13).

4. Dispositif détecteur suivant la revendication 3, dans lequel les moyens de fixation pour la bride (13) comprennent des écrous de blocage (9, 10) disposés de manière à serrer une partie (6) du palier (6, 7).

5. Dispositif détecteur suivant la revendication 3 ou la revendication 4, dans lequel l'extrémité axialement intérieure des moyens de fixation (11) est prévue et disposée de manière à être en face et à faible distance d'une surface axialement extérieure d'une bride respective (4) de la virole de moyeu.

6. Dispositif détecteur suivant l'une quelconque des revendications 3 à 5, dans lequel les moyens rotatifs (21) sont sensiblement annulaires, avec un diamètre extérieur plus petit que le diamètre intérieur du corps annulaire (12) des moyens de fixation annulaires (11), la périphérie radialement extérieure de la pièce rotative (21) étant en face de la périphérie intérieure du corps annulaire (12).

7. Dispositif détecteur suivant la revendication 5, dans lequel une gorge annulaire (16), s'étendant axialement, est prévue dans une bride (13) des moyens de fixation (11) ou une face d'extrémité opposée, axialement extérieure, d'un corps cylindrique (22) des moyens rotatifs (21), et une surélévation annulaire sensiblement complémentaire (25), s'étendant axialement et qui peut se loger dans la gorge annulaire (16), est prévue dans l'autre de ces parties.

8. Dispositif détecteur suivant l'une quelconque des revendications 1 à 7, dans lequel le corps annulaire (12) des moyens de fixation (11) porte, à sa périphérie radialement intérieure, les moyens de détection (30), et les moyens rotatifs (21) portent, dans leur périphérie radialement extérieure, les moyens de commande (40).

**Patentansprüche**

1. Umdrehungszähler für ein Fahrradrad mit einer Nabenwelle (2), die im Betrieb am Fahrradrahmen befestigt ist, einer Nabenhülse (5), die ein Paar von radialen Flanschen aufweist und drehbar auf der Nabenwelle (2) gelagert ist durch mindestens zwei Lager (6, 7), wobei der Zähler eine Befestigungsvorrichtung (11) direkt oder indirekt auf der Nabenwelle (2) aufweist und eine Drehvorrichtung (21) direkt oder indirekt auf der Nabenhülse (5), die gemeinsam damit drehbar ist, wobei die Befestigungsvorrichtung (11) in enger Nähe der Drehvorrichtung (21) angeordnet ist, wobei die Befestigungsvorrichtung (11) und die Drehvorrichtung (21) eine Meßvorrichtung (30) bzw. ein Betätigungsorgan (40) tragen, welche so ausgebildet und angeordnet sind, daß sie periodisch miteinander wechselwirken, um im Betrieb des Zählers ein periodisches elektrisches Signal zu erzeugen, wobei der Zähler mit einer elektrischen Schaltung (51—55) verbunden ist, und wobei das elektrische Signal eine Funktion der Umdrehungsanzahl des Rades ist, dadurch gekennzeichnet, daß die Befestigungsvorrichtung (11) ein ringförmiges Teil (12, 13) aufweist, das so ausgebildet und angeordnet ist, daß es eine Dichtvorrichtung für das jeweilige Lager (6, 7) zwischen Nabenwelle (2) und -hülse (5) bildet, wobei ein radial innerliegender Teil (13) an der Nabenwelle (2) befestigt ist und ein radial außenliegender Teil (12) in großer Nähe, aber beabstandet der Drehvorrichtung (21) gegenüberliegt, um eine Relativbewegung dazwischen zu ermöglichen, aber im wesentlichen den Eintritt von Fremdmaterial dazwischen zu verhindern.

2. Umdrehungszähler nach Anspruch 1, dadurch gekennzeichnet, daß die Meßvorrichtung (30) auf der Befestigungsvorrichtung (11) befestigt ist und das Betätigungsorgan (40) auf der Drehvorrichtung (21).

3. Umdrehungszähler nach einem der Ansprüche 1 oder 2, dadurch gekennzeichnet, daß der radial außenliegende Teil die Form eines ringförmigen Körpers (12) hat und der radial innenliegende Teil die Form eines Flansches (13) hat, der eine Zentralöffnung bildet, die im Durchmesser größer als die Nabenwelle (2) ist, die sich durch die Öffnung erstreckt und am Flansch (13) befestigt ist.

4. Umdrehungszähler nach Anspruch 3, dadurch gekennzeichnet, daß die Befestigungsvorrichtung für den Flansch (13) aufweist: eine Sperrmutteranordnung (9, 10), die angeordnet ist, um einen Teil (6) des Lagers (6, 7) zu befestigen.

5. Umdrehungszähler nach einem der Ansprüche 3 oder 4, dadurch gekennzeichnet, daß das axial innenliegende Ende der Befestigungsvorrichtung (11) so ausgebildet und angeordnet ist, daß es in großer Nähe der axial außenliegenden Fläche des jeweiligen Flansches (4) der Nabenhülse gegenübersteht.

6. Umdrehungszähler nach einem der Ansprüche 3 bis 5, dadurch gekennzeichnet, daß die Drehvorrichtung (21) im wesentlichen ringförmig ist, mit einem äußeren Durchmesser, der geringer ist als der Innendurchmesser des ringförmigen Teils (12) der ringförmigen Befestigungsvorrichtung (11), wobei der radiale Außenumfang der Drehvorrichtung (21) dem inneren Umfang des ringförmigen Körpers (12) gegenübersteht.

7. Umdrehungszähler nach Anspruch 5, dadurch gekennzeichnet, daß eine ringförmige, sich axial erstreckende Nut (16) in einem der Flansche (13) der Befestigungsvorrichtung (11) oder der gegenüberliegenden axial außenliegenden Endfläche eines zylindrischen Körpers (22) der Drehvorrichtung (21) vorgesehen ist, und daß ein ringförmiger, sich axial erstreckender im wesentlichen komplementärer Vorsprung (25) auf dem anderen von den beiden vorgesehen ist, der in der ringförmigen Nut (16) unterbringbar ist.

8. Umdrehungszähler nach einem der Ansprüche 1 bis 7, dadurch gekennzeichnet, daß der ringförmige Körper (12) der Befestigungsvorrichtung (11) an seinem radial innenliegenden Umfang die Meßvorrichtung (30) trägt, und daß die Drehvorrichtung (21) an ihrem radial außenliegenden Umfang das Betätigungsorgan (40) trägt.

0 053 894

FIG. 1

FIG. 2

FIG. 3

FIG. 4

FIG. 5

1